(19) Europäisches Patentamt

European Patent Office

Office européen des brevets

(11) **EP 2 882 177 A1**

(12) **EUROPEAN PATENT APPLICATION**

(43) Date of publication:
**10.06.2015 Bulletin 2015/24**

(51) Int Cl.:
*H04M 11/06* $^{(2006.01)}$     *H04B 3/46* $^{(2015.01)}$

(21) Application number: **13290303.0**

(22) Date of filing: **06.12.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Drooghaag, Benoit
2018 Antwerpen (BE)**
• **Wahibi, Issam
2018 Antwerpen (BE)**

(74) Representative: **Plas, Axel Ivo Michel
IP HILLS NV
Hubert Frère-Orbanlaan 329
9000 Gent (BE)**

(54) **Method and device for configuring communication lines against impulse noise**

(57)     A method is disclosed for limiting packet retransmissions at a physical layer over a communication line comprising a communication channel with different tones. In a first step (102) of the method, affected tones of these different tones affected by noise causing the packet retransmissions are identified. In a further step (104) data bits of future packets are prevented to be loaded on these affected tones. According to a further embodiment, this first step comprises inspecting data bits loaded on these different tones during periods wherein the packet retransmissions occurred.

Fig. 4

**Description**

**Field of the Invention**

The present invention generally relates to the automatic configuration of communication lines such as Digital Subscriber Lines or DSL. In the field of DSL, this automatic configuration and optimization of communication lines is also known as Dynamic Line Management or DLM. Typically, DLM is performed centrally at the side of the network operator by assessing physical layer or PHY performance characteristics from transceivers connected to the communication lines. Based on this assessment, the communication line is then reconfigured by updating the PHY related parameters of the transceivers.

More particularly the invention relates to the configuration of communication lines affected by impulse noise and using packet retransmissions at the physical layer for recovering lost data packets impacted by this impulse noise.

**Background of the Invention**

Digital Subscriber Line or DSL techniques allow connecting Customer Premises Equipment or CPE to the internet or any other data network over traditional twisted pair communication lines. Typically, the communication lines run from the user premises to a Digital Subscriber line Access Multiplexer or DSLAM where a bundle of these twisted pair communication lines is terminated. The DSLAM is then further connected to a backbone for example over a fibre link or high speed Ethernet link connecting the DSLAM with the network provider.

DSL lines are susceptible to noise degrading the communication signals on the line resulting in a lower net data throughput feasible over the DSL line. Two types of noise are considered, stationary noise and impulse noise.

The stationary noise takes the form of a constant or slowly varying noise background and is mainly caused by crosstalk picked up from neighbouring lines from the bundle. The main consequence of stationary noise is that it limits the rate at which a line can synchronize. Techniques such as vectoring have been developed to mitigate the impact of stationary noise and to increase the achieved data rate.

Impulse noise or IN on the other hand consists of short bursts of noise that have a relatively short duration but a high amplitude resulting in a total loss of the actual communication signal. These bursts of noise can either occur randomly in time as a SHINE or Single High Impulse Noise Event or be repetitive and follow a regular pattern as REIN or Repetitive Impulse Noise. A typical source of SHINE is the on or off switching of electrical appliances in the vicinity of a modem. REIN on the other hand is typically caused by electrical interference from a running electrical device. The frequency of occurrence then corresponds to a multiple of the operating frequency of the electricity network, for example 50Hz or 60Hz. Data loss caused by impulse noise can be mitigated by Impulse Noise Protection mechanisms or INP.

A first INP mechanism is by using a combination of Forward Error Correction or FEC and interleaving denoted as IFEC impulse noise protection. In DSL, the IFEC is typically implemented by a Reed-Solomon (RS) coder and a data interleaver spreading the burst of errors from the impulse noise over several codewords of the RS coder. However, a drawback of the IFEC mechanisms is that this type of INP is constantly consuming bandwidth as redundancy is introduced to all data even when no impulse noise is present.

A second INP mechanism is based on retransmissions of data that was corrupted by impulse noise. These retransmission are at the physical layer or PHY where a Data Transmission Unit or DTU is retransmitted when corrupted. An implementation for this technique for DSL service providers is described under the ITU-T G.998.4 standard and is also referred to as G.INP, RTX, or ARQ (Automatic Repeat Query).

One of the big advantages of RTX versus IFEC lies in the fact that the bitrate overhead needed for data retransmission is only used when necessary, i.e. only when a data retransmission is needed there will be overhead. As a result, when there is little impulse noise and, thus, no retransmissions are required, no overhead is introduced and the full net data rate is available for user traffic.

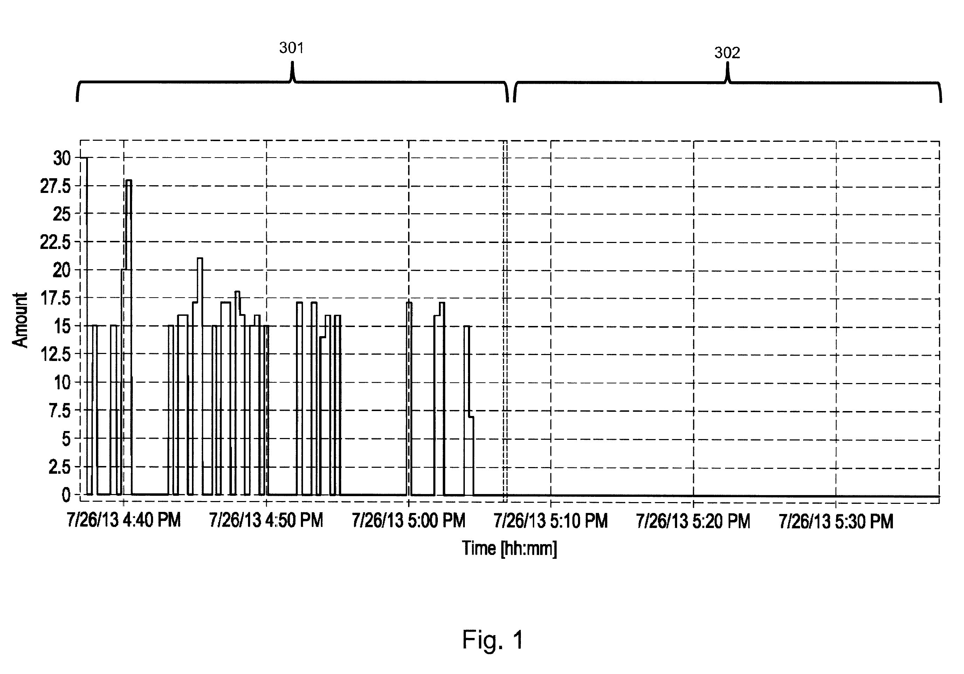

However, it was found that in some cases external noise that is not mitigated by vectoring may affect a limited set of tones of a DSL line rendering the line unstable albeit PHY retransmissions are used. This is illustrated in Fig. 1 where the amount of Code Violations or CVs are shown as a function of time, i.e. the amount of unrecoverable transmission. These CVs were measured on a real vectored line in the field that is picking up external noise affecting a specific tone range between the tones 1170 and 1198 and this only during specific periods. Although the number of affected tones is relatively small, the stability of the line is dramatically degraded during these specific periods.

In current Dynamic Line Management or DLM techniques the above kind of stability issues are resolved by monitoring and reconfiguring the communication lines with different PHY parameters in the transceivers through the DSLAM. These DLM techniques are for example offered by the Alcatel-Lucent's 5530 Network Analyser (NA) and described in section 17 of the respective User Guide, release 8.1, as made available on September 2013. There, the DLM does not identify the source of the unstability nor resolves it but rather selects a different set of PHY parameters according to stored profiles. It is therefore a disadvantage that, by these traditional DLM techniques, a suboptimal configuration of the line is accomplished when the line is affected by external noise.

It is an object of the invention to solve stability issues in an alternative way resulting in a better performance.

**Summary of the Invention**

This object is achieved, in a first aspect, by a method for limiting packet retransmissions at a physical layer over a communication line comprising a communication channel with different tones. The method comprising:

- identifying affected tones of these different tones affected by noise causing the packet retransmissions;
- preventing data bits of future packets to be loaded on the affected tones.

Such a communication line may for example be a DSL line whereby transceivers connected at both ends communicate by modulating the data bits of the packets onto the different tones of data symbols using DMT or Discrete Multi-Tone modulation and sending these symbols over the communication line. When a packet sent over the communication line is received with errors and cannot be corrected it is retransmitted. When using DSL this may be done according to the ITU-T G.998.4 standard. Noise affecting the communication line such as impulse noise may not be mitigated by other techniques such as variable bit loading or vector processing and may be frequency dependent thereby only affecting a subset of the tones. As this external noise is not expected or foreseen data bits are anyhow loaded on those affected carriers during the occurrence of the noise and thus lost during transmission.

The affected tones may be identified by monitoring the communication line over a certain amount of time and then inspecting the tones to identify the affected tones.

By traditional DLM techniques, the communication line would have been reconfigured with another profile to solve the instability of the line resulting in, for example, a lower raw data throughput thereby still loading data bits onto the affected tones which would still cause retransmissions. It is an advantage that a stable line is obtained because bitloading on the affected tones is prevented thereby avoiding retransmissions caused by external noise repeatedly affecting the identified tones.

According to an embodiment the identifying comprises inspecting data bits loaded on the different tones during periods wherein the packet retransmissions occurred.

The occurance of external noise affecting the affected tones will result in a temporal lower amount of bits that are loaded onto these affected tones after the appearance of the external noise. After a certain noise free period more bits will again be loaded onto the affected tones until the same external noise again affects the affected tones of the communication line. The affected tones may then be identified as the tones where the loaded bits drop significantly during certain time interval. The drop may be quantified by a predetermined threshold whereby a tone is considered affected when the bits loaded on a tone drop more than this predefined threshold.

It is an advantage that bitloading data for the tones is available in network analysers for DLM. This data is then retrieved during monitoring periods by on-demand line quality diagnosis or LQD. This allows a straightforward implementation of the method in existing DLM systems.

According to an alternative embodiment the identifying comprises inspecting the signal to noise ratio of the communication channel during periods wherein the packet retransmissions occurred.

The signal to noise ratio or SNR in a specific tone over time will show within which time periods there is more noise present due to the external noise. It is thus a direct indication of where the external noise effects the tones. A tone may then for example be identified as affected when the difference in SNR at different times is greater than a predefined threshold.

It is an advantage that the SNR for all the tones is available in network analysers for DLM. This data is then retrieved during monitoring periods by on-demand line quality diagnosis or LQD. This allows a straightforward implementation of the method in existing DLM systems.

Advantageously, the preventing is only performed if a first loss of bandwidth caused by the packet retransmissions is greater than a second loss of bandwidth that would occur if no data bits would be loaded onto the affected tones.

Thus, before preventing the bitloading onto the affected tones, it is assessed whether it would result in an increase or decrease of useful data throughput. It is an advantage that unnecessary preventing of bitloading on the affected tones is performed resulting in a lower data throughput or bandwidth.

According to an embodiment, the preventing is performed by adding virtual noise on the affected tones.

With adding virtual noise it is meant that the transceivers at the ends of the communication line add this virtual noise for an affected tone to the actual SNR that was measured for that tone. This way, when there is a noise-free period on the affected tone in the communication line, the transceivers will still interpret it as a tone affected by noise because of the virtual noise they have to add on top of the measured SNR. The virtual noise may further be specified as a virtual PSD or Power Spectral Density. In this case, the transceivers will determine the SNR and thus the bits to be loaded on the tones from the virtual PSD and the actually measured PSD.

It is advantage that virtual noise is available as a PHY configuration parameter in DSL communication systems that can be centrally configured, for example by a DLM system resulting in a straightforward implementation of the method.

It is a further advantage that virtual noise still allows bitloading on the affected tone because the resulting SNR may still be high enough to allow a reduced amount of bits to be loaded on the affected tone.

Alternatively, the preventing is performed by masking frequency carriers associated with the affected tones.

In other words, the transceivers are prevented from loading any data bits at all onto the affected tones.

This has the same advantage that frequency carrier masking is available as a PHY configuration parameter in DSL communication systems that can be centrally configured, for example by a DLM system resulting in a straightforward implementation of the method.

According to a second aspect, the invention relates to a computer program product comprising computer-executable instructions for performing the method according to the first aspect.

According to a third aspect, the invention relates to a computer readable storage medium comprising the computer program product according to the second aspect.

According to a fourth aspect the invention relates to a data processing system programmed for carrying out the method according to the first aspect.

According to a fifth aspect the invention also relates to a Dynamic Line Management or DLM device for limiting packet retransmissions at a physical layer over a communication line comprising a communication channel with different tones. This DLM device configured to:

- identify affected tones of the different tones affected by noise causing the packet retransmissions;
- prevent data bits of future packets to be loaded on these affected tones.

### Definitions

The following description and embodiments will be better understood in light of the following definitions. Most of these definitions define terms that are commonly used in the field of DSL communication lines or in the wider field of telecommunication.

Net Data Rate or NDR is the total bitrate available on a communication line at the PHY layer when no retransmissions occur. In the case of a DSL line, it is the data rate at which the line is synchronized.

Error-Free Throughput or EFTR is the actual data rate available for user traffic. It consists of the NDR minus the overhead needed for retransmissions. When no retransmission occurs, the EFTR equals the NDR. The EFTR is varying, depending on impulse noise conditions.

minEFTR or minimum EFTR is a parameter reporting the minimum EFTR observed over a given observation interval which may for example be 15 minutes, 1 hour or 1 day. The considered EFTR to obtain the minEFTR is the averaged value over a 1 second window.

A Code Violation or CV is the occurrence of an unrecoverable error in a transmitted PHY data unit, i.e. one CV corresponds to the loss of a PHY data unit. In the case of a CV, the packet or data unit may have been retransmitted several times until a maximum amount of retransmissions was achieved. A CV may still be corrected at the transport layer, for example in the case of a transport layer according to the TCP protocol.

ES or Errored Seconds are the count of one-second time intervals wherein one or more CRC or Code Redundancy Checks has failed or wherein one or more LOS or Loss of Signal defect, LPR or Loss of Power defect or SEF or Severely Errored Frame defect has occurred.

SES or Severely Errored Seconds are the count of one-second time invervals wherein 18 or more CRC or Code Redundancy Checks has failed or wherein one or more LOS or Loss of Signal defect, LPR or Loss of Power defect or SEF or Severely Errored Frame defect has occurred.

LEFTRS or Low Error-Free Throughput Seconds is the number of seconds during which a receiver has observed a low error-free throughput or EFTR. The G.998.4 recommendations define the rule when EFTR is low.

### Brief Description of the Drawings

Fig. 1 illustrates code violations occurring on a communication line as a function of time;

Fig. 2 illustrates a data access network comprising a DLM device for configuring communication lines according to an embodiment of the invention;

Fig. 3 illustrates the mean and variance of the Signal-to-Noise Ratio as a function of the tone number measured on a communication line during a certain time interval;

Fig. 4 illustrates a flow diagram of functionality performed by a DLM device according to an embodiment of the invention.

**Detailed Description of Embodiment(s)**

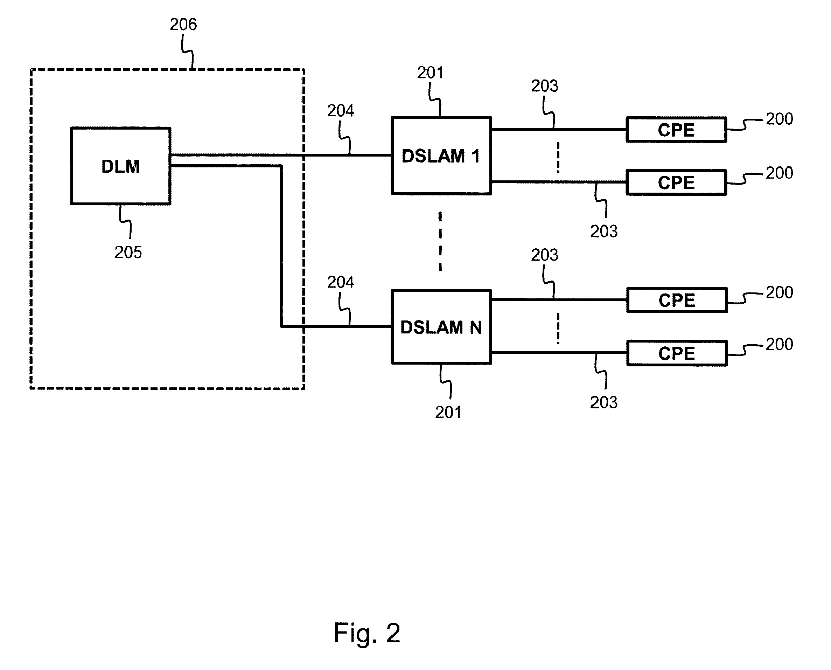

Fig. 2 illustrates a network topology of a data access network providing data access over Digital Subscriber Line or DSL technology. Customer Premises Equipment or CPE 200 is connected over a twisted pair such as for example a twisted copper telephone line, to a Digital Subscriber line Access Multiplexer or DSLAM 201. This DSLAM 201 modulates and demodulates data that is sent and received over the DSL lines 203. On the other side, it also multiplexes this data over a backbone link 204 to the network operator's Central Office or CO 206. This backbone link 204 is typically a high speed data link such as an optical link or high speed Ethernet link.

In order to manage the configuration of the DSL line 203 a device 205 is installed in the CO 206 for performing Dynamic Line Management or DLM. During operation, the DSLAM 201 and CPE 200 send performance data to the DLM device 205. Then, at regular time intervals, the DLM device 205 reconfigures the DSL lines in order to improve the performance of the DSL lines 203. These time intervals may range from several hours to several days balancing the improved performance with the lost data connection during reconfiguration for the CPE 200 and thus the network operator's customer.

The functionality of the DLM device 205 may be implemented as a software application. This functionality is then encoded as instructions executable by a processor. The DLM device 205 may be a single device such as a server, but may also extend over several physical devices to form a single logical device, for example by several server interoperating to perform the DLM.

When reconfiguring a communication line 203, the DLM device 205 may reconfigure the physical layer or PHY parameters of the transceivers connected to the line, i.e. the transceivers in the DSLAM 201 and the transceivers in the CPE 200. One set of PHY parameters and performance characteristics is related to the error coding or error correction of data. One way of error correction is to configure the line 203, i.e. the transceivers connected to a line 203, to use retransmission of DTUs sent over the line. This technique is described in the ITU-T G.998.4 standard for DSL lines and is also referred to as Automatic Repeat Query or ARQ, as G.INP or as RTX mode.

However, as illustrated by the first part 301 shown in Fig. 1, G.INP cannot correct all packet errors caused by impulse noise occurring on a communication line 203. This part 301 shows the coding violations or CVs monitored on a communication line of a vectoring group that contains 19 lines of 250m. All lines are configured to use G.INP. A twentieth line is prevented to synchronise by simulating a cable cut close to the DSLAM 201. Therefore, the CPE 200 connected to this cut cable is still turned on and continues to send continuously three signals on the three activation tones. These three signals appear as an external crosstalk for the adjacent 19 lines of the vectoring group. As this line is not part of the vectoring group, the crosstalk caused by this line is not cancelled by the applied vectoring. Although this simulated external noise only affects three tones of a total of 4000 tones in the 19 lines, the line stability is greatly infected as indicated by the CVs which are an indication of the line stability.

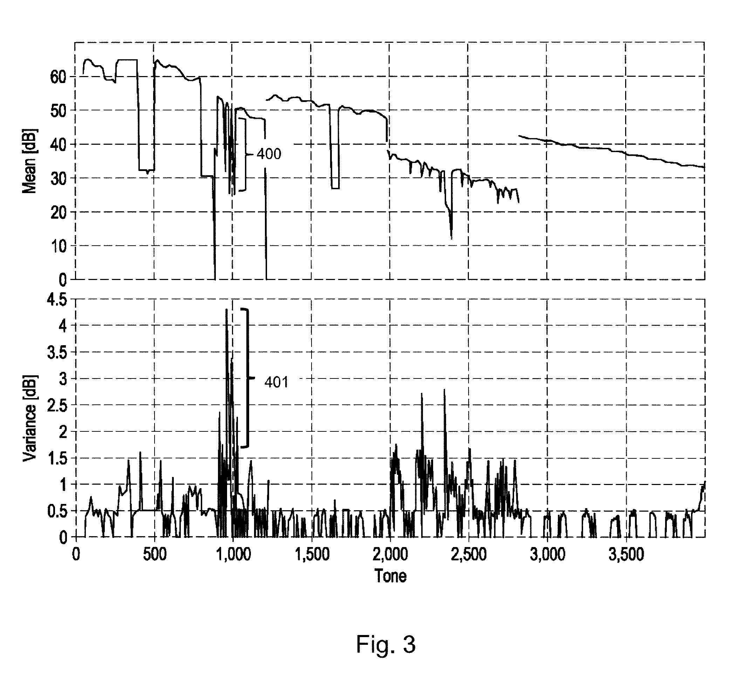

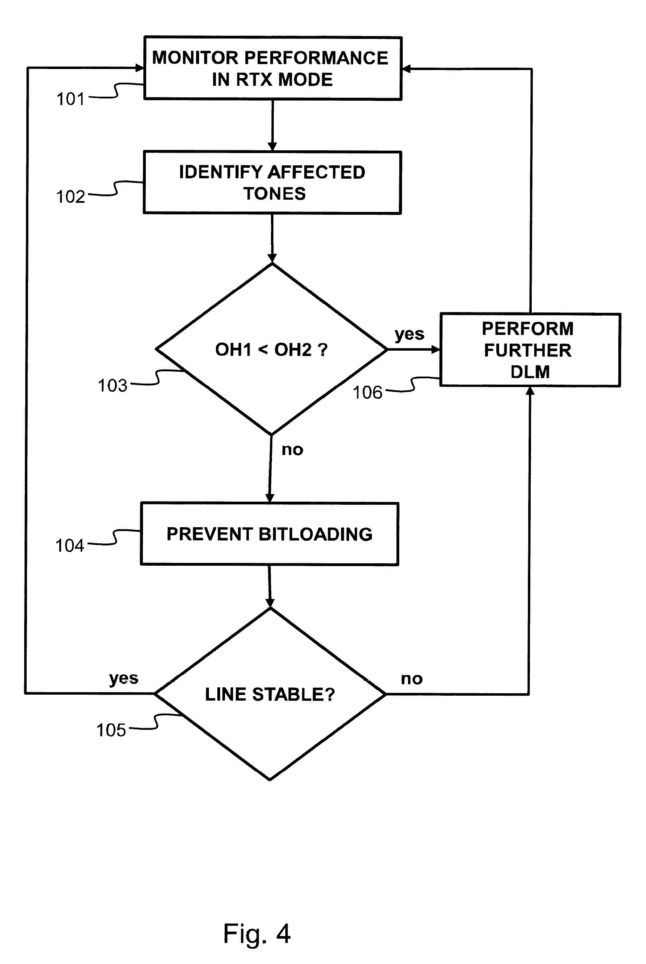

Fig. 4 shows a flow diagram of functionality implemented in the DLM device 205 for solving the problem illustrated by Fig. 3 according to embodiments of the invention.

In a first step 101, a line 203 is configured in RTX or G.INP mode and monitored during operation by the DLM device 205.

In a second step 102, as part of the reconfiguration of the communication line 203, it is identified if and which tones are affected by external noise.

According to an embodiment, the identifying in step 102 is performed by inspection of the temporal bitloading graph. Such a graph provides information on the amounts of bits that were loaded on each tone as a function of time during the monitoring period. When visually representing such a graph, the frequencies or tones are represented on the Y-axis and the time is represented on the X-axis. For each X-Y coordinate, the amount of bits is then represented by a different color intensity. By the bitloading graph, i.e. by the data represented by the graph, it is then determined where the number of bits drop dramatically for a certain time period. This may be done by comparing the drop with a predefined threshold. If the drop exceeds this threshold, the tone is indicated as affected. To further improve the identifying of affected tones, it may be checked if the time where the threshold is exceeded corresponds with a stability degradation of the communication line. Such a degradation may then be identified by an increase of CV, ES, SES, LEFTRS or by a decrease in the minimum error free throughput. If a tone of a line thus shows a drop in loaded bits greater than the predefined threshold and, optionally, it is related to a degradation of the line, the tone is identified as affected.

According an alternative embodiment, the identifying in step 102 is performed by inspection of the signal-to-noise ratio or SNR. Again, the SNR is provided during the monitoring step 101 and is measured and provided by the transceivers at both ends of the line 203. Fig. 3 shows the mean and variance in dB of the SNR for every tone during a time interval within the period 301 wherein external noise has affected the three tones as shown in Fig 1. The external noise affecting the three tones causes a drop 400 in the mean value of the SNR and an increase 401 in the variance of the SNR. A tone may then be identified as affected if a drop in the mean of the SNR is greater than a predetermined threshold value.

Once the affected tones are identified, the DLM device proceeds to the next step 103. There the overhead $OH_{G.INP}$ caused by the retransmissions in G.INP during the monitoring step 101 is calculated by:

$$OH_{G.INP} = NDR - EFTR$$

whereby

- $NDR$ is the Net Data Rate and
- $EFTR$ is the Error-Free Throughput

Then, the overhead $OH_{tones}$ is calculated as the overhead that would be induced by not loading any data onto the affected tones:

$$OH_{tones} = Symbol\ Rate * \sum\nolimits_{affected\ tones} b_k$$

whereby

- $Symbol\ Rate$ is the maximum amount of symbols that can be sent over the line 203 per second
- $b_k$ is the amount of bits that would be loaded on a tone k if no external noise is present

It is then assessed whether

$$OH_{G.INP} < OH_{tones}$$

If so, the DLM device 205 proceeds to step 106 to perform further traditional DLM optimization techniques, for example as described in Alcatel-Lucent's 5530 Network Analyser (NA) User Guide, release 8.1, as made available on September 2013.

If not, the overhead induced by not loading any bits onto the affected carriers would be smaller than the overhead induced by the retransmission correcting corrupted bits loaded onto these carriers. The device 205 then proceeds to step 104. In this step 104, the communication line is configured such that loading of bits onto the affected tones is prevented.

According to an embodiment, this preventing step 104 is performed by the addition of virtual noise onto the affected tones. During the configuration of the line, the device 205 then passes a virtual noise Power Spectral Density or virtual noise PSD to the CPE via the DSLAM. Then, when the CPE 200 resynchronizes the line 203, it must consider the maximum of the real noise PSD and the virtual noise PSD to determine the SNR. In other words, the transceivers on the line will configure the line as if there is a constant noise, i.e. the virtual noise, on the affected tones. Thereby, no or less bits will be loaded onto the affected tones after the configuration of the lines.

According to an alternative embodiment, the preventing step 104 is performed by masking the affected tones, i.e. by configuring the carrier mask in the CPE 200. By such a carrier mask, the maximum PSD for a line 203 is specified. When a tone is identified as affected, a low carrier mask will be specified for that tone avoiding transmissions or bits to be loaded on the affected tone.

After the preventing step 104, the device 205 proceeds to step 105 to assess whether the line is now stable or not. This may be done in a similar way as for step 102. If the line is still unstable and thus the issue of the external noise cannot be resolved, traditional DLM techniques 106 can again be used to resolve the stability of the line 203.

The second part 301 of Fig. 1 shows the CVs after reconfiguration of the communication line by preventing bitloading on the three affected carriers. By only preventing bits to be loaded on the three identified carriers, the stability of the line went from unstable to stable, i.e. no CVs left on the line.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1.  A method for limiting packet retransmissions at a physical layer over a communication line (203) comprising a communication channel with different tones; said method comprising:

    - identifying (102) affected tones of said different tones affected by noise causing said packet retransmissions;
    - preventing (104) data bits of future packets to be loaded on said affected tones.

2.  A method according to claim 1 wherein said identifying comprises inspecting data bits loaded on said different tones during periods wherein said packet retransmissions occurred.

3.  A method according to claim 1 wherein said identifying comprises inspecting the signal to noise ratio of said communication channel during periods wherein said packet retransmissions occurred.

4.  A method according to claim 1 wherein said preventing (104) is only performed if (103) a first loss of bandwidth caused by said packet retransmissions is greater than a second loss of bandwidth that would occur if no data bits would be loaded onto said affected tones.

5.  A method according to claim 1 wherein said preventing is performed by adding virtual noise on said affected tones.

6.  A method according to claim 1 wherein said preventing is performed by masking frequency carriers associated with said affected tones.

7.  A computer program product comprising computer-executable instructions for performing the method according to claim 1 when the program is run on a computer.

8.  A computer readable storage medium comprising the computer program product according to claim 7.

9.  A data processing system programmed for carrying out the method according to claim 1.

10. A Dynamic Line Management or DLM device (205) for limiting packet retransmissions at a physical layer over a communication line (203) comprising a communication channel with different tones; said DLM device (205) configured to:

    - identify (102) affected tones of said different tones affected by noise causing said packet retransmissions;
    - prevent (104) data bits of future packets to be loaded on said affected tones.

**Fig. 1**

Amount — 30, 27.5, 25, 22.5, 20, 17.5, 15, 12.5, 10, 7.5, 5, 2.5, 0

Time [hh:mm] — 7/26/13 4:40 PM, 7/26/13 4:50 PM, 7/26/13 5:00 PM, 7/26/13 5:10 PM, 7/26/13 5:20 PM, 7/26/13 5:30 PM

301, 302

Fig. 2

Fig. 3

Fig. 4

Europäisches
Patentamt

European
Patent Office

Office européen
des brevets

## EUROPEAN SEARCH REPORT

Application Number

EP 13 29 0303

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/097243 A1 (AWARE INC [US]; CUNNINGHAM CHRISTOPHER [US]) 6 August 2009 (2009-08-06) | 1-4,6-10 | INV. H04M11/06 H04B3/46 |
| Y | * paragraph [0020] - paragraph [0030] * * paragraph [0088] - paragraph [0099] * ----- | 5 | |
| Y | EP 2 200 185 A1 (ALCATEL LUCENT [FR]) 23 June 2010 (2010-06-23) * paragraph [0002] - paragraph [0008] * * paragraph [0015] - paragraph [0016] * * paragraph [0047] - paragraph [0054] * ----- | 5 | |
| A | US 2004/240464 A1 (FITE WAYNE CHARLES [US]) 2 December 2004 (2004-12-02) * paragraph [0013] - paragraph [0014] * * paragraph [0025] - paragraph [0026] * * paragraph [0041] - paragraph [0043] * ----- | 1-10 | |
| A | EP 2 237 438 A1 (HUAWEI TECH CO LTD [CN]) 6 October 2010 (2010-10-06) * paragraph [0025] - paragraph [0029] * ----- | 1-10 | TECHNICAL FIELDS SEARCHED (IPC) H04M H04B |

The present search report has been drawn up for all claims

| Place of search | Date of completion of the search | Examiner |
|---|---|---|
| Munich | 20 May 2014 | Agante da Silva, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 29 0303

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2014

| Patent document cited in search report | | Publication date | Patent family member(s) | | Publication date |
|---|---|---|---|---|---|
| WO 2009097243 | A1 | 06-08-2009 | EP | 2250801 A1 | 17-11-2010 |
| | | | US | 2011053528 A1 | 03-03-2011 |
| | | | US | 2014036980 A1 | 06-02-2014 |
| | | | WO | 2009097243 A1 | 06-08-2009 |
| EP 2200185 | A1 | 23-06-2010 | CN | 102257740 A | 23-11-2011 |
| | | | EP | 2200185 A1 | 23-06-2010 |
| | | | JP | 5312608 B2 | 09-10-2013 |
| | | | JP | 2012512583 A | 31-05-2012 |
| | | | KR | 20110102900 A | 19-09-2011 |
| | | | US | 2011261674 A1 | 27-10-2011 |
| | | | WO | 2010069474 A1 | 24-06-2010 |
| US 2004240464 | A1 | 02-12-2004 | NONE | | |
| EP 2237438 | A1 | 06-10-2010 | CN | 101505177 A | 12-08-2009 |
| | | | EP | 2237438 A1 | 06-10-2010 |
| | | | US | 2010296648 A1 | 25-11-2010 |
| | | | WO | 2009097765 A1 | 13-08-2009 |

EPO FORM P0459

For more details about this annex : see Official Journal of the European Patent Office, No. 12/82